# EUROPEAN PATENT SPECIFICATION

(11) **EP 0 555 030 B1**
(45) Date of publication and mention of the grant of the patent: **08.07.1998**
(21) Application number: 93300694.2
(22) Date of filing: 29.01.1993
(51) Int. Cl.: H04N 5/232

(54) **Camera apparatus with shake correction**
Kameraapparat mit Verwackelkorrektur
Caméra avec correction de tremblement

(30) Priority: 31.01.1992 JP 16968/92; 19.03.1992 JP 63905/92
(43) Date of publication of application: 11.08.1993
(73) Proprietor: SONY CORPORATION, Tokyo 141 (JP)
(72) Inventor: Ishizuka, Shigeki, c/o Sony Corporation, Shinagawa-ku, Tokyo (JP); Sato, Koichi, c/o Sony Corporation, Shinagawa-ku, Tokyo (JP); Nikami, Akira, c/o Sony Corporation, Shinagawa-ku, Tokyo (JP); Sato, Mitsuru, c/o Sony Corporation, Shinagawa-ku, Tokyo (JP)
(74) Representative: Nicholls, Michael John

(56) References cited:
- EP-A- 332 169
- CH-A- 669 271
- GB-A- 1 442 773
- US-A- 3 212 420
- US-A- 5 095 198

## Description

The present invention relates to a camera shake correcting apparatus for use in a video tape recorder (VTR) or the like.

US-A-5 016 112 and US-A-4 998 162 describe video cameras and US-A-4 542 419 describes a recording and reproducing apparatus for a video camera.

Conventional video cameras need camera shake correction.

Camera shake is when the cameraman takes a picture of an object with a video camera, a picked-up image is moved in the upper, lower, right or left direction by the unintentional action of cameraman's hands or body. The picked-up image may, of course, be moved in a complex fashion such as when it is moved in the oblique directions or the like.

More specifically, if the video camera is moved delicately (or moved badly depending on a difference among individuals), then a light from an object is moved on a target screen of a charge coupled device (CCD) in its various directions such as upper, lower, right and left directions or the like. Thus, when the picked-up image is reproduced on a picture screen of a television monitor or the like, a reproduced picture is constantly moved in the upper, lower, right or left direction.

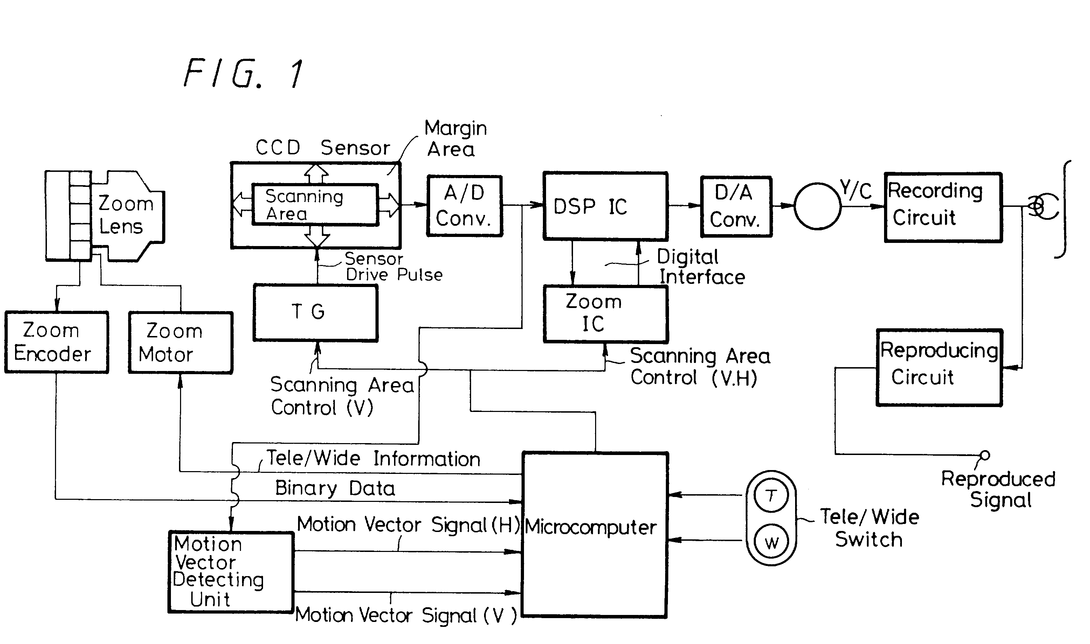

Figure 1 of the accompanying drawings shows an arrangement of a conventional video tape recorder having a built-in camera with a camera shake correction system. As shown in Figure 1, a motion vector of a picture that is moved by a camera shake is detected and an address of a cut-out frame of the CCD image is changed, thereby correcting the camera shake. The picture is cut out from the CCD scanning area by changing the cut-out frame so that an area in which the cut-out frame is moved in response to the camera shake must be prepared within the CCD scanning area. As a result, the scanning area is reduced in area substantially. To solve this problem, the picture area whose picture is reduced is zoomed up by a digital signal processing and extended to the normal picture frame. There are then the disadvantages such that a picture size is changed and that a resolution of a reproduced picture is lowered.

Optical arrangements for correcting camera shake are also known, for instance from JP-A-2 120 821 (on which the precharacterising portions of the independent claims are based), CH-A-0 669 271, GB-A-1 442 773 and EP-A-0 332 169. All of these correct for shake motion by tilting a glass plate to alter the prism angle. US-A-3 212 420 discloses a similar principle for correcting for pitch and roll of a vehicle.

According to the present invention, there is provided a variable angular prism, an angle of which is changeable by changing a rotational angle of a plate glass thereof in response to a drive signal to thereby refract an incident light;
apical angle prism position detecting means for detecting a rotational angle position of said plate glass;
camera shake amount detecting means for detecting an amount of camera shake;
calculating means for calculating the camera shake amount and the rotational angle position of said plate glass to generate and output an apical angle prism drive signal; and
variable angular prism drive means including drive coils for driving said apical angle prism in response to application of said apical angle prism drive signal to said drive coils; characterised in that:
the variable angular prism drive means further comprises damping coils for providing a damping signal to said calculating means;
apical angle prism velocity detecting means are provided to detect the rotational angular velocity of said plate glass;
a differentiating circuit is connected to receive and differentiate a signal from the drive coils and to supply the differentiated signal to said calculating means;
said calculating means being arranged to generate said apical angle prism drive signal from the calculated shake amount of said camera, the rotational angle position of said plate glass, the rotational angular velocity of said plate glass and said differentiated signal.

According to a second aspect of the present invention, there is provided a method of correcting camera shake using a variable angular prism, an angle of which is changeable by changing a rotational angle of a plate glass thereof in response to a drive signal to thereby refract an incident light, the method comprising:
detecting a rotational angle position of the plate glass;
detecting the amount of camera shake;
calculating the camera shake amount and the rotational angle position of the plate glass;
generating and outputting an apical angle prism drive signal based on the camera shake amount and rotational angle position; and
driving said apical angle prism by supplying the apical angle prism drive signal to drive coils of said variable angle prism drive means; characterised by:
generating a damping signal by providing damping coils in said variable angle prism drive means;
detecting the rotational angular velocity of the plate glass;
differentiating the output from said drive coils to generate a differentiated signal; and
generating said apical angle prism drive signal from the camera shake amount, the rotational angle position and rotational angular velocity of said plate glass and said differentiated signal.

The hereinafter described embodiments of camera shake correcting apparatus can increase a phase margin of servo characteristic, correct camera shake optically, be prevented from being affected by a fluctuation of elements upon mass-production and be prevented from being affected by a dependency of temperature characteristic.

Embodiments of the present invention will now be described, by way of example, with reference to the accompanying drawings, in which:
Figure 1 is a block diagram showing a video tape recorder (VTR) having a built-in camera of a conventional camera shake correction system;
Figure 2 is a block diagram showing a circuit arrangement of an optical camera shake correcting apparatus;
Figure 3 is a graph used to explain the camera shake correcting apparatus of Figure 2;
Figure 4 is a signal flow diagram used to explain the camera shake correcting apparatus of Figure 2;
Figure 5 is a graph used to explain the camera shake correcting apparatus of Figure 2;
Figures 6A and 6B are respectively graphs used to explain the camera shake correcting apparatus of Figure 2;
Figure 7 is a signal flow diagram used to explain the camera shake correcting apparatus of Figure 2;
Figures 8A and 8B are respectively graphs used to explain the camera shake correcting apparatus of Figure 2;
Figure 9 is a block diagram showing a circuit arrangement of another camera shake correcting apparatus;
Figure 10 is a diagram showing a structure of a main portion of the camera shake correcting apparatus of Figure 9;
Figure 11 is a diagram showing a main portion of the camera shake correcting apparatus of Figure 9;
Figure 12 is a cross-sectional view showing a main portion of the camera shake correcting apparatus of Figure 9;
Figure 13 is a cross-sectional view showing a main portion of the camera shake correcting apparatus of Figure 9;
Figure 14 is a cross-sectional view showing a main portion of the camera shake correcting apparatus;
Figure 15 is a block diagram showing a main portion of the camera shake correcting apparatus of Figure 9;
Figure 16 is a diagram showing a circuit arrangement of a main portion of the camera shake correcting apparatus of Figure 9;
Figure 17 is a signal flow diagram used to explain the camera shake correcting apparatus of Figure 9;
Figure 18 is a signal flow diagram used to explain the camera shake correcting apparatus of Figure 9;
Figure 19 is a signal flow diagram used to explain the camera shake correcting apparatus of Figure 9;
Figure 20 is a signal flow diagram used to explain the camera shake correcting apparatus of Figure 9;
Figure 21 is a graph used to explain the camera shake correcting apparatus of Figure 9;
Figure 22 is a graph used to explain the camera shake correcting apparatus of Figure 9;
Figure 23 is a graph used to explain the camera shake correcting apparatus of Figure 9;
Figure 24 is a diagram showing a main portion of a camera shake correcting apparatus according to an embodiment of the present invention;
Figure 25 is a diagram showing a circuit arrangement of a main portion of a camera shake correcting apparatus according to the present invention;
Figure 26 is a diagram showing a circuit arrangement of a main portion of a modified example of the circuit arrangement shown in Figure 25;
Figure 27 is a signal flow diagram used to explain the camera shake correcting apparatus of the present invention;
Figure 28 is a signal flow diagram used to explain the camera shake correcting apparatus of the present invention;
Figure 29 is a graph signal flow diagram used to explain the camera shake correcting apparatus of the present invention; and
Figure 30 is a graph used to explain the camera shake correcting apparatus of the present invention.

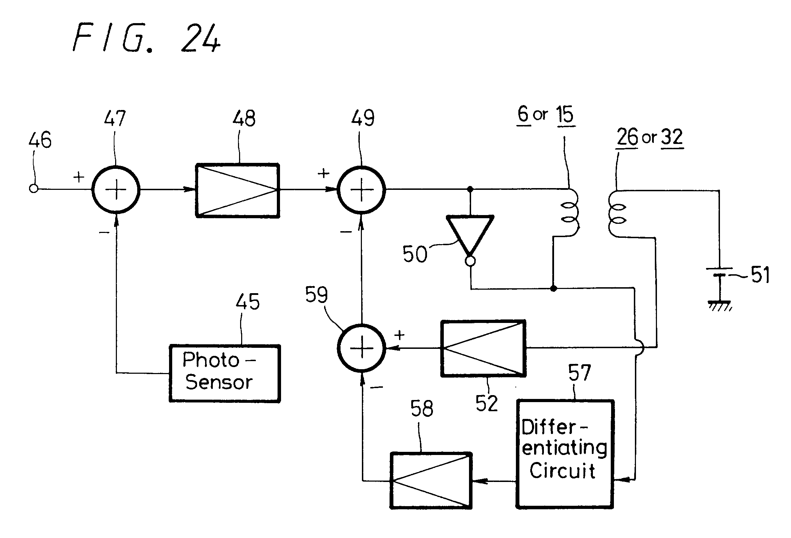

Before describing the present invention, shown in Figure 24, two optical camera shake correction systems on which the invention is based will be described to improve understanding.

In the hereinafter described systems, camera shake is optically corrected before an image is focused on the CCD image sensing element. As a means for optically correcting a camera shake, there is utilised a prism that is what might be called a VAP (variable angular prism) element.

As will be described later on, this variable angular prism element comprises two circular plate glasses bonded by a cylindrical transparent spring portion of bellows configuration whose diameter is substantially equal to those of the two plate glasses. A viscous liquid is filled into the spring portion and a vertical angle of this prism is changed by changing the angle of the two plate glasses, thereby refracting a light.

Then, by moving the prism in the horizontal or vertical direction in response to an amount in which the angular velocity is changed due to the camera shake, a light is refracted and prevented from being moved on the target screen of the CCD device, thereby correcting the camera shake.

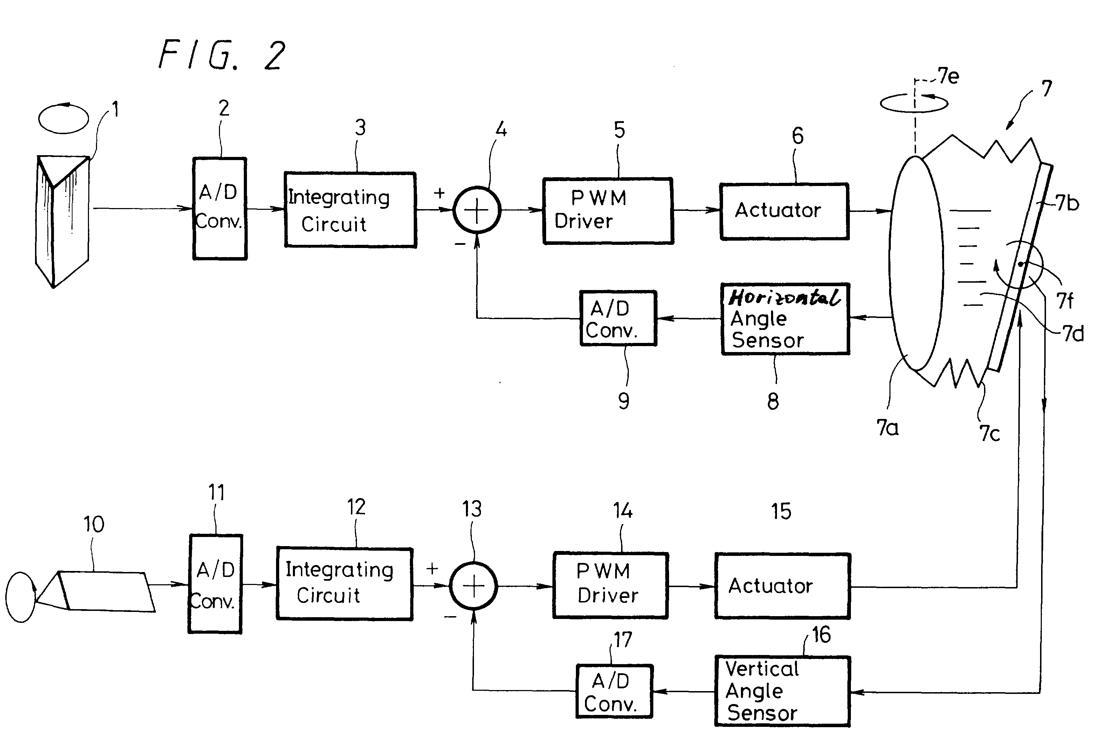

FIG. 2 of the accompanying drawings shows a camera shake correcting apparatus using the aforesaid VAP element.

This camera shake correcting apparatus will be described below.

Referring to FIG. 2, there is provided a horizontal direction angular velocity sensor that detects an angular velocity at which the video camera is moved in the horizontal direction by the camera shake. As the angular velocity sensor, there may be used a piezoelectric vibratory gyro, for example.

As shown in FIG. 2, a detected signal from the angular velocity sensor 1 is supplied through an analog-to-digital (A/D) converter 2 to an integrating circuit 3. The integrating circuit 3 performs the integrating processing such as the addition of a preceding detected signal of the detected signal from the angular velocity sensor 1 to a signal attenuated by a predetermined gain or the like. An integrated output from the integrating circuit 3 is supplied to an adding circuit 4. An output from the adding circuit 4 is supplied to a PWM (pulse width modulation) driver 5, in which it is processed as a PWM signal and then fed to an actuator 6. The actuator 6 actuates a prism 7 in the horizontal direction.

The prism 7 is what might be called the VAP (variable angular prism) element. As described above, the prism 7 comprises two circular plate glasses 7a, 7b bonded by a cylindrical transparent spring portion 7c of bellows configuration whose diameter is substantially the same as those of the two plate glasses 7a, 7b. A viscous liquid is filled into the spring portion 7c. An axis 7e provided on the plate glass 7a of the prism 7 is connected with the actuator 6 that actuates the prism 7 in the horizontal direction. An axis 7f provided on the plate glass 7b of the prism 7 is connected with an actuator 15 that actuates the prism 7 in the vertical direction. Therefore, the plate glass 7a is rotated in the horizontal direction and the plate glass 7b is rotated in the vertical direction.

A position (i.e., rotational angle of the prism 7 in the horizontal direction) of the plate glass 7a rotated by the actuator 6 in the horizontal direction is detected by a horizontal angle sensor 8 serving as a position detecting means. A detected signal from the horizontal angle sensor 8 is supplied through an A/D converter 9 to the adding circuit 4. Accordingly, the adding circuit 4 subtracts from the integrated output of the integrating circuit 3 the detected signal representative of the rotational angle of the prism 7 in the horizontal direction. A subtracted output of the adding circuit 4 is supplied to the PWM driver 5.

There is shown an angular velocity sensor 10 that detects an angular velocity in response to a motion of the video camera when the video camera is moved in the vertical direction by the camera shake. As the angular velocity sensor 10, there may be utilized a piezoelectric vibratory gyro.

A detected signal from the angular velocity sensor 10 is supplied through an A/D converter 11 to an integrating circuit 12 which processes the detected signal supplied thereto in an integrating fashion such as the addition of a preceding detected signal of the detected signal from the angular velocity sensor 10 to a signal attenuated by a predetermined gain to thereby provide an integrated output. The integrated output from the integrating circuit 12 is supplied to an adding circuit 13. An output from the adding circuit 13 is supplied to a PWM (pulse width modulation) driver 14, in which it is processed as a PWM signal and then fed to an actuator 15.

The actuator 15 is coupled to the axis 7f of the plate glass 7b of the prism 7 to rotate the plate glass 7b in the vertical direction. A position (rotational angle of the prism 7 in the vertical direction) at which the plate glass 7b is rotated in the vertical direction by the actuator 15 is detected by a vertical angle sensor 16 serving as a position detecting means. A detected signal from the vertical angle sensor 16 is supplied through an A/D converter 17 to the adding circuit 13. Therefore, the adding circuit 13 subtracts from the integrated output of the integrating circuit 12 the detected signal representative of the rotational angle of the prism 7 in the vertical direction. The subtracted output is supplied to the PWM driver 14.

More specifically, the angular velocities of the horizonal and vertical directions generated when the camera shake occurs are detected. The actuators 6 and 15 rotate the prism 7 in the horizontal and vertical directions based on the detected angular velocities to refract a light so that the light can be prevented from being moved on the target screen of the CCD element (not shown) disposed at the rear stage of the prism 7 in the upper, lower, right and left directions. Also, the positions of the prism 7 (rotational angles of the horizontal and vertical directions) are respectively detected and then fed back to the actuators 6 and 15.

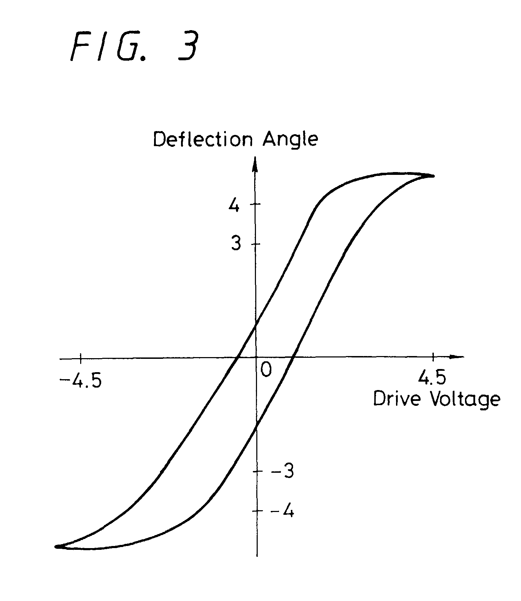

FIG. 3 of the accompanying drawings is a graph showing a driving curve of the prism 7 wherein an axis of ordinate represents a deflection angle (θ) and an axis of abscissa represents a drive voltage (V). As shown in FIG. 3, a relationship between the deflection angle and the drive voltage of the prism 7 has a hysteresis characteristic.

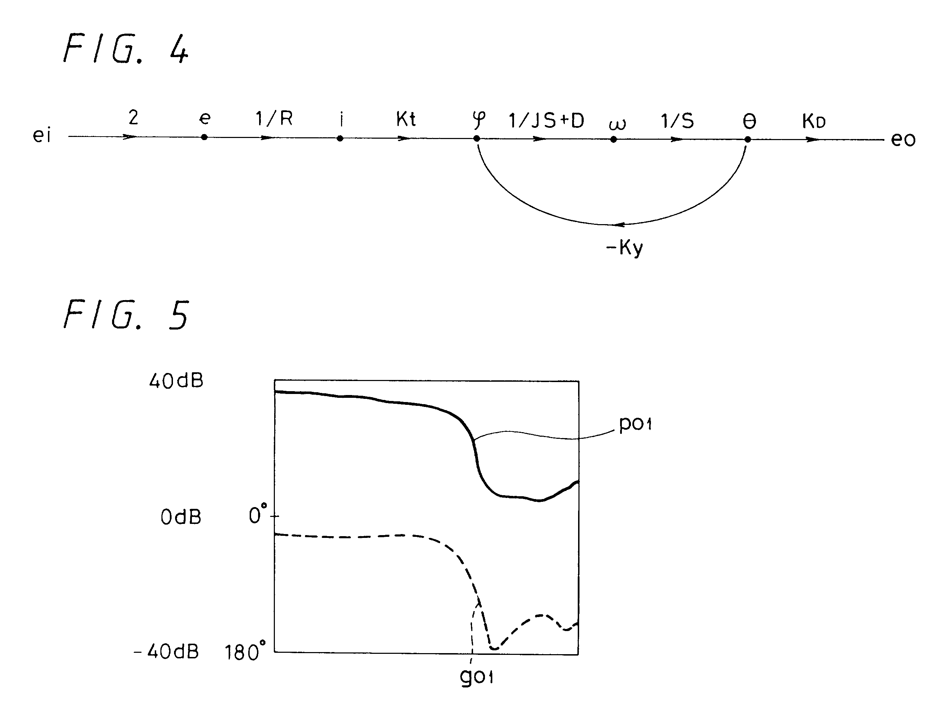

FIG. 4 of the accompanying drawings shows a signal flow diagram of the camera shake correcting apparatus shown in FIG. 2. A signal flow of the camera shake correcting apparatus will hereinafter be described with reference to FIG. 4.

In FIG. 4, reference symbol R depicts a winding resistance (V/A) of the actuator 6 or 15, Kₜ a torque constant (700g • cm/A), J an inertia (g • cm/sec2), D a viscosity resistance (g • cm/sec) of the liquid filled into the prism 7, Kθ a spring constant (g • cm/deg) of the spring portion 7c and eᵢ an alternating drive voltage (V), respectively.

A gain (open loop gain) in this case can be expressed by the equation (1) below:

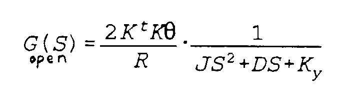

Expressing the equation (1) by a retarded general expression of second order yields the following equation (2):$\text{G} \text{(} \text{j} \text{ω) =} \frac{\text{K}}{\text{1-(} \frac{\text{ω}}{{\text{ω}}_{\text{n}}} {\text{)}}^{\text{2}} \text{+} \text{j2} \text{ζ(} \frac{\text{ω}}{{\text{ω}}_{\text{n}}} \text{)}}$ where n represents a normalization and ζ represents an attenuation coefficient.

A phase and a gain in the aforesaid open loop are illustrated in FIG. 5 of the accompanying drawings. FIG. 5 shows a phase curve pol and a gain curve gol wherein an axis of ordinate represents a phase (degree) and a gain (dB) and an axis of abscissa represents a frequency (Hz).

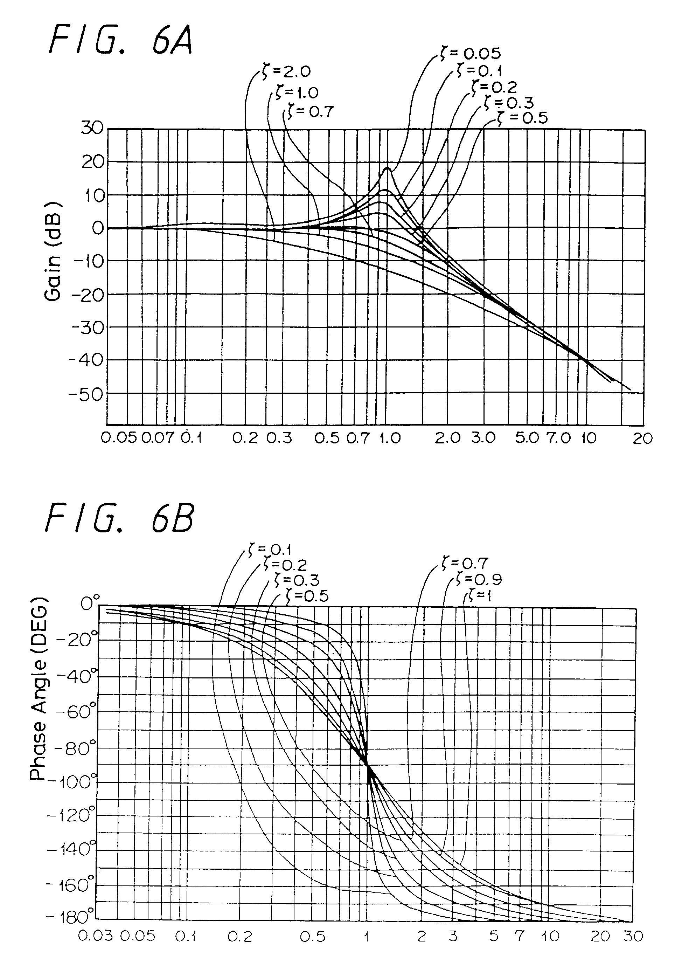

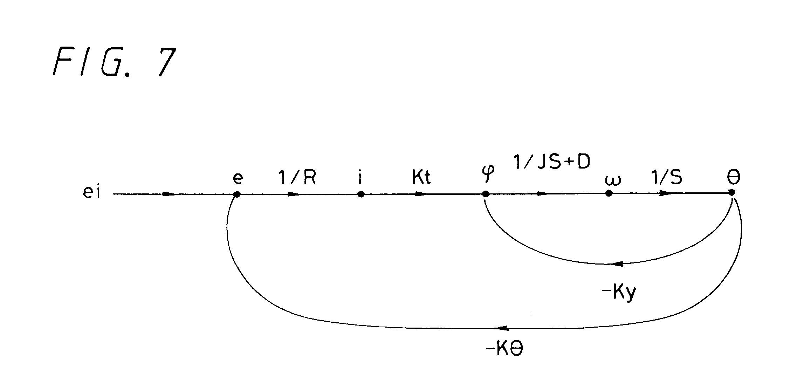

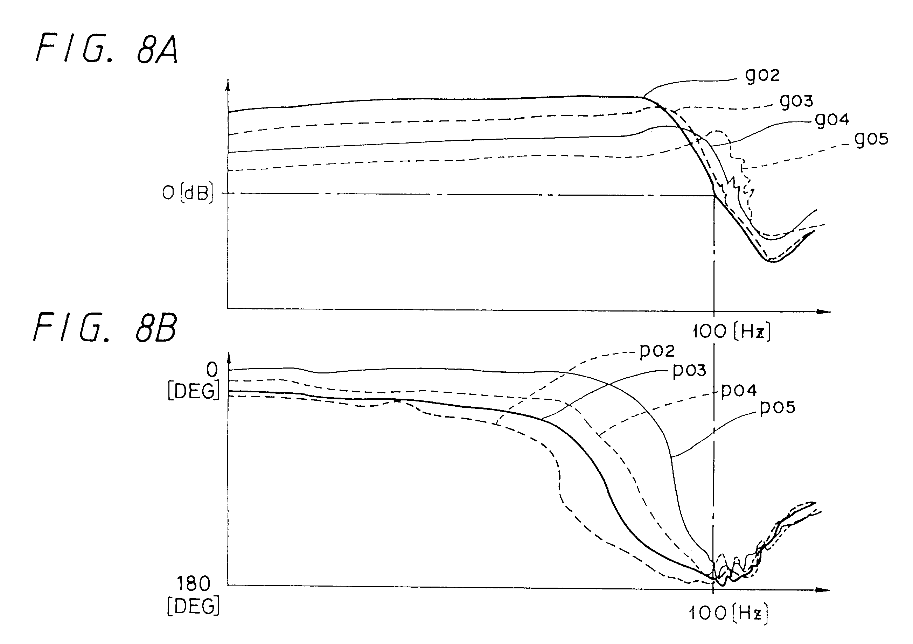

FIGS. 6A and 6B of the accompanying drawings are Bode diagrams showing characteristics such that K is normalized to 1 (K = 1). FIG. 6A shows gain characteristics plotted to the frequency and FIGS. 6B shows phase characteristics plotted to the frequency. FIG. 6A shows gain characteristics when the attenuation coefficient ζ is 0.05, 0.1, 0.2, 0.3, 0.5, 0.7, 1.0 and 2.0. FIG. 6B shows phase characteristics when the attenuation coefficient ζ is 0.1, 0.2, 0.3, 0.5, 0.7, 0.9 and 1.0.

As shown in FIGS. 6A and 6B, when the attenuation coefficient ζ is 0.7, the phase and gain characteristics are satisfactorily matched with the frequencies. Further, although the phase and gain characteristics are disturbed by disturbances such as a resonance characteristic appearing near 100 Hz, they are satisfactorily matched at frequencies of 50 Hz or below.

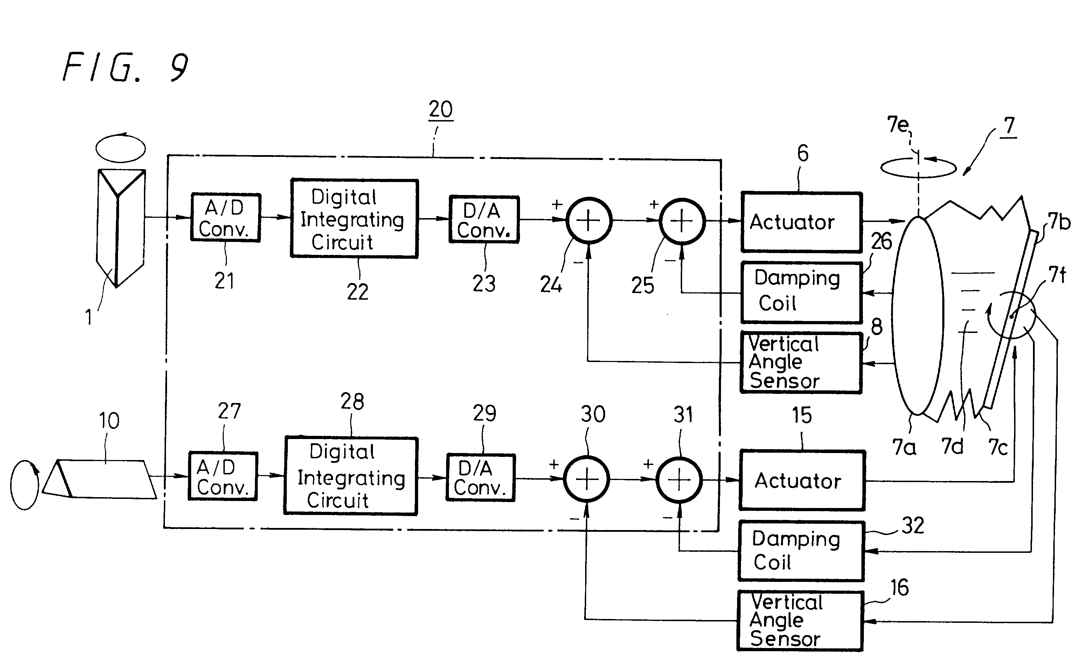

FIG. 7 of the accompanying drawings is a signal flow diagram showing the signal flow when a closed loop is formed of the PWM drivers 5, 14, the actuators 6, 15 and the vertical angle sensors 8, 16 where the integrated results by the integrating circuits 3 and 12 are assumed to be reference values ref depending on the open loop characteristic of the aforesaid camera shake correcting apparatus.

The gain in this closed loop can be expressed by the following equation (3):${\text{G}}_{\text{close}} \text{(} \text{S} \text{) =} \frac{{\text{G}}_{\text{o}} \text{/} \text{K} \text{θ}}{\text{1 +} {\text{G}}_{\text{o}}} \text{=} \frac{\text{1}}{\frac{\text{K} \text{θ}}{{\text{G}}_{\text{o}}} \text{+} \text{K} \text{θ}} \text{=} \frac{\text{1}}{\frac{\text{R}}{\text{2} {\text{K}}_{\text{t}}} \text{(} {\text{JS}}^{\text{2}} \text{+} \text{DS} \text{+} {\text{K}}_{\text{y}} \text{) +} \text{K} \text{θ}} \text{=} \frac{\text{1}}{\frac{\text{RJ}}{\text{2} {\text{K}}_{\text{t}}} {\text{S}}^{\text{2}} \text{+} \frac{\text{RD}}{\text{2} {\text{K}}_{\text{t}}} \text{S} \text{+(} \frac{{\text{RK}}_{\text{y}}}{\text{2} {\text{K}}_{\text{t}}} \text{+} \text{K} \text{θ)}}$

FIGS. 8A and 8B of the accompanying drawings are graphs showing measured results of the gain in the closed loop. FIG. 8A shows the change of gain relative to the input level wherein an axis of ordinate represents the gain (dB) and an axis of abscissa represents the frequency (Hz). FIG. 8B shows the change of phase relative to the input level wherein an axis of ordinate represents the phase (degree) and an axis of abscissa represents the frequency (Hz).

In the graphs of FIGS. 8A and 8B, a characteristic curve go2 represents a measured gain when the input level falls within a range of ± 200 mV, a characteristic curve go3 represents a measured gain when the input level falls within a range of ± 50 mV, a characteristic curve go4 represents a measured gain when the input level falls within a range of ± 25 mV, a characteristic curve go5 represents a measured gain when the input level falls within a range of ± 10 mV, a characteristic curve po2 represents a measured phase when the input level falls within a range of ± 200 mV, a characteristic curve po3 represents a measured phase when the input level falls within a range of ± 50 mV, a characteristic curve po4 represents a measured phase when the input level falls within a range of ± 25 mV and a characteristic curve po5 represents a measured phase when the input level falls within a range of ± 10 mV, respectively.

Study of the graphs shown in FIGS. 8A, 8B reveals that the gain and the phase also are changed relative to the input level in the closed loop characteristic similarly to the open loop characteristic.

The aforesaid camera shake correcting apparatus is not free from some disadvantages that will be described below.

As is clear from the equation (1), the input and output characteristics of the prism 7 are made nonlinear due to the viscosity resistance D and the spring constant K_{y} of the prism 7, in particular, the gain is decreased for a small signal. There is then the disadvantage that a small camera shake cannot be suppressed.

As is clear from the graph of FIG. 3 showing the relationship between the drive voltage of the prism 7 and the deflection angle, such relationship includes the hysteresis characteristic. There is then the disadvantage that the prism 7 cannot be moved as it is instructed.

Further, as is clear from the graphs of FIGS. 6A, 6B showing the gain and phase characteristics, the characteristic like the resonance characteristic appears at the frequency near 100 Hz, thereby causing a frequency disturbance.

The aforesaid characteristics are determined depending on the inertia J, the viscosity resistance D and the spring constant K_{y} of the prism 7. Therefore, there will be no other way than improving the prism 7-system mechanical arrangement if these characteristics are improved.

As is clear from the respective graphs of FIG. 5 and FIGS. 8A, 8B, there are the disadvantages such that the gain of the low band component does not become 0 dB and hence the frequency position becomes unstable (i.e., there is no phase margin at the gain of 0 dB so that an oscillation tends to occur, the gain of the low band component depends much on the level, an oscillation tends to occur at the frequency near 100 Hz due to the fluctuation of peak level (this is also true in FIGS. 6A and 6B) and a temperature dependency is large.

The bellows-like spring portion 7c is formed by folding a material whose strength is affected by a temperature. Hence, the spring constant thereof is changed with a temperature. Also, the viscosity of the liquid 7 filled into the spring portion 7c is changed with a temperature. In addition, the input and output transfer function of the prism 7 is the system of second-order or larger (because of spring term, friction term or the like). There is then the disadvantage such that an oscillation margin is reduced when the feedback servo is effected.

According to a second system, there is provided a camera shake correcting apparatus which can remove the aforesaid disadvantages and in which characteristics can be improved more.

As shown in FIGS. 9 to 23, such camera shake correcting apparatus comprises the variable angular prism 7, the driving means 29, 6, 15 for driving the variable angular prism 7, the position detecting means 8, 16 and 20 for detecting the position of the variable angular prism 7 and velocity detecting means 1, 10, 26, 32 and 20 for detecting a velocity. The driving means 6, 15, 20 drive the variable angular prism 7 in response to detected results of the position detecting means 8, 16, 20 and the velocity detecting means 1, 10, 26, 32 and 20.

Since the variable angular prism 7 is driven in response to the detected results from the position detecting means 8, 16, 20 and the velocity detecting means 1, 10, 26, 32 and 20, a nonlinearity of the variable angular prism 7 can be alleviated and the variable angular prism 7 can be driven smoothly. Therefore, a phase margin serving as a servo characteristic can be increased, whereby a fluctuation of elements in the mass-production can be reduced. Thus, the camera shake correcting apparatus can be made strong to a temperature characteristic.

This camera shake correcting apparatus will hereinafter be described in detail with reference to FIG. 9.

In FIG. 9, like parts corresponding to those of FIG. 2 are marked with the same references and therefore need not be described in detail.

As shown in FIG. 9, the detected signal from the angular velocity sensor (horizontal direction angular velocity sensor) 1 is supplied through an A/D converter 21 to a digital integrating circuit 22. The angular velocity sensor 1 detects a yawing angle or the like, for example. The digital integrating circuit 22 effects the integration by adding the digital detected signal from the A/D converter 21 with an attenuated preceding detected signal. An integrated output from the digital integrating circuit 22 is converted into an analog signal by a digital-to-analog (D/A) converter 23 and then fed to an adding circuit 24.

The adding circuit 24 subtracts from the detected signal of the D/A converter 23 a position signal that is obtained when the vertical angle sensor (i.e., PID: potentio • integral • differential sensor) 8 detects the position of the variable angular prism (VAP element) 7 in the horizontal direction. An output of the adding circuit 24 is supplied to an adding circuit 25 of the next stage.

The adding circuit 25 subtracts a signal of a damping coil 26 from the output of the adding circuit 24. A resultant subtracted signal is supplied to the actuator 6 as a drive signal, whereby the prism 7 is moved in the horizontal direction.

The detected signal from the angular velocity sensor (vertical direction angular velocity sensor) 10 is supplied through an A/D converter 27 to a digital integrating circuit 28. The angular velocity sensor 10 detects a pitching angle of the like, for example.

The digital integrating circuit 28 effects the integration by adding the digital detected signal from the A/D converter 27 to the attenuated preceding detected signal similarly as described above. An integrated output from the digital integrating circuit 28 is converted into an analog signal by a D/A converter 29 and then fed to an adding circuit 30. The adding circuit 30 subtracts from the detected signal of the D/A converter 29 a position signal that is obtained when the vertical angle sensor (i.e., PID sensor) 16 detects the position of the variable angular prism (VAP element) 7 in the vertical direction. An output of the adding circuit 30 is supplied to an adding circuit of the next stage. The adding circuit 31 subtracts a signal of a damping coil 32 from the output of the adding circuit 30. A resultant subtracted signal is supplied to the actuator 15 as the drive signal, whereby the prism 7 is moved in the vertical direction.

As described above, according to the camera shake correcting apparatus of the first system described, by controlling the vertical angle sensors 8 and 16, it is impossible to suppress a variety of disadvantages caused by the viscosity of the liquid 7d in the prism 7, the spring resistance of the spring portion 7c, fluctuations caused by various factors such as axial friction or the like, temperature dependency characteristics, etc.

In order to suppress various disadvantages by using the vertical angle sensors 8 and 16, it has been proposed to form a so-called D loop such that the output e₀ (see FIG. 4) is differentiated and fedback to obtain the phase margin. The D loop cannot be utilized in this case because a signal-to-noise (S/N) ratio of the vertical angle sensors 8, 16 is poor in the high band, in particular. Further, if a P loop gain is increased in order to obtain a DC gain, then an oscillation margin is lost. Furthermore, although the integrating loop (I) is effective for increasing the DC gain, the integrating loop becomes useless unless the D loop is utilized together therewith because the integrating loop, when used alone, deteriorates the phase margin.

According to this second system, there is employed, instead of the differential D loop, a velocity loop, i.e., a feedback loop of the damping coils 26 and 32.

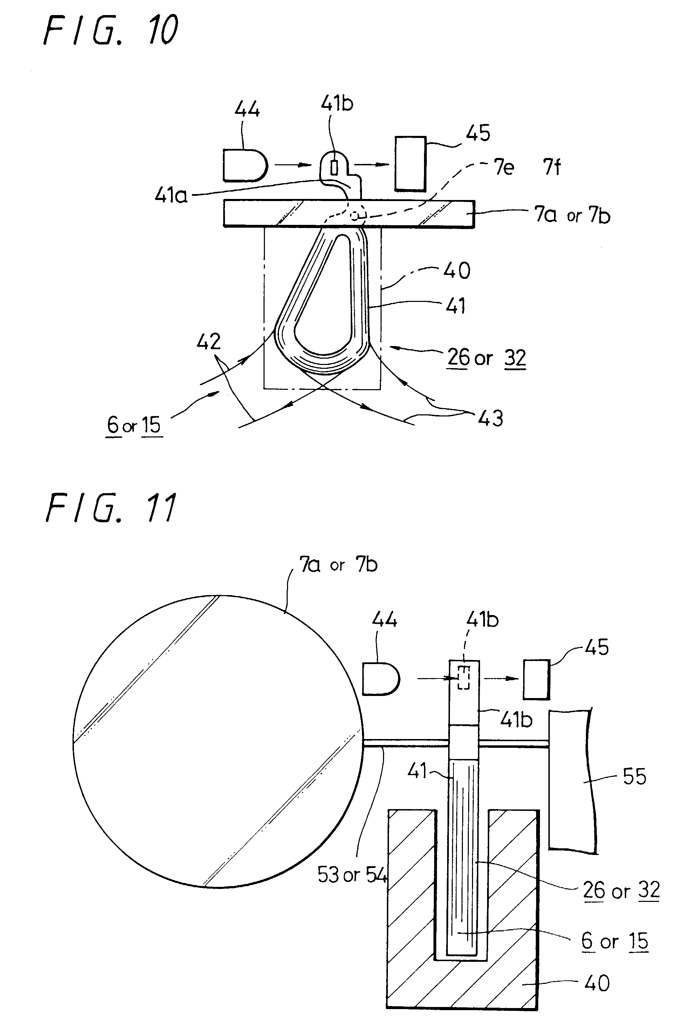

FIGS. 10 and 11 of the accompanying drawings shows structures of the plate glass 7a or 7b of the prism 7, the actuator 6 or 15, the damping coil 26 or 32, a stator or the like.

As shown in FIGS. 10 and 11, there is provided a bobbin 41 which has an axial hole defined at the position slightly higher than the intermediate portion thereof for accepting the horizontal axis (or vertical axis 7f) 7e. A detecting portion 41a is formed above this axial hole and a slit 41b is formed on the top portion of the detecting portion 41a of the bobbin 41.

On the left of the slit 41a and also at the so-called prism center, there is disposed a photo-diode 44 so that an optical axis thereof passes the slit 41b. On the right of the slit 41b and also at the so-called prism center, a photo-sensor 45 is disposed so as to become able to receive a light emitted from the photo-diode 44.

Thus, the light emitted from the photo-diode 44 is focused on the photo-sensor (PSD: photo-sensitive device) 45. That is, the position at which the light emitted from the photo-diode 44 is focused on the photo-sensor 45 is moved in response to the condition that the bobbin 41 is rotated by the actuators 6, 15, which is obtained as a voltage.

Around the lower portion of the bobbin 41, there are wound drive coil (actuator) wires 42 and damping coil wires 43 in parallel to each other.

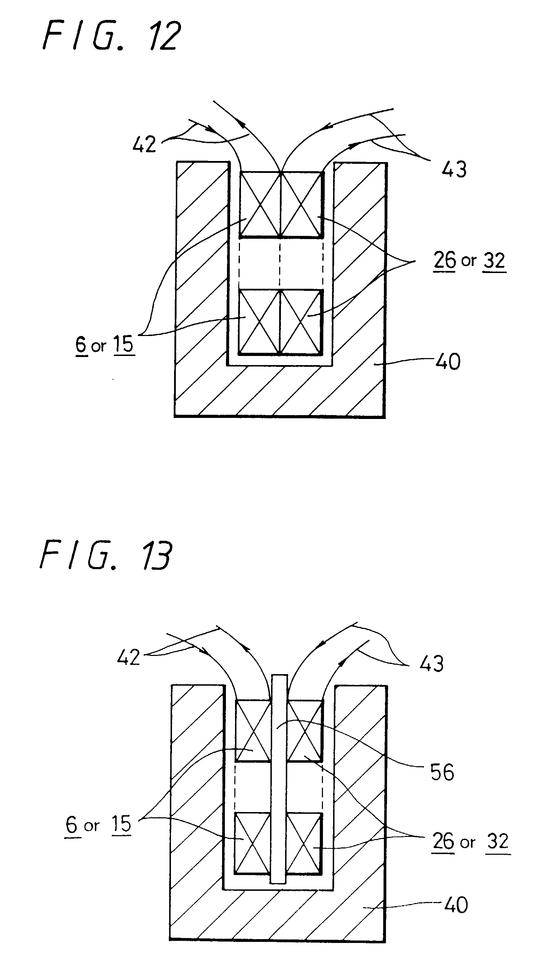

The bobbin 41 having the drive coil wires 42 and the damping coil wires 43 wound therearound is disposed within a stator 41 as shown in FIG. 12 of the accompanying drawings. A horizontal axis shaft rod 53 or vertical axis shaft rod 54 is attached to the horizontal axis 7e or vertical axis 7f of the bobbin 41. One end of the shaft rod 53 or 54 is attached to the plate glass 7a or 7b of the prism 7 and the other end thereof is attached to the inner wall portion of a housing 55.

FIG. 12 shows the condition that the drive coil wires 42 and the damping coil wires 43 are wound around the bobbin 41. As shown in FIG. 12, the drive coil wires 42 are wound around the left portion of the bobbin 41 (not shown) to construct the actuator 6 or 15 and the damping coil wires 43 are wound around the right portion of the bobbin 41 (not shown) to construct the damping coil 26 or 32.

FIG. 13 of the accompanying drawings shows other example of the structure of the coil shown in FIG. 12.

As shown in FIG. 13, a spacer 56 is disposed at substantially a central portion of the bobbin 41. The drive coil (actuator 6 or 15) wires 42 are wound around the left portion (on the left side of the bobbin 41) of the spacer 56 to construct the actuator 6 or 15. Also, the damping coil wires 43 are wound around the right portion (on the right side of the bobbin 41) of the spacer 56 to construct the damping coil 26 or 32.

According to this structure, a high frequency crosstalk between the two coils (actuator 6, damping coil 26; and actuator 15, damping coil 32) can be removed. Hence, the characteristics can be prevented from being affected.

While there is provided the single bobbin 41 as described above, the present invention is not limited thereto and two bobbins 41 may be attached to the left and right sides of the spacer 56, for example.

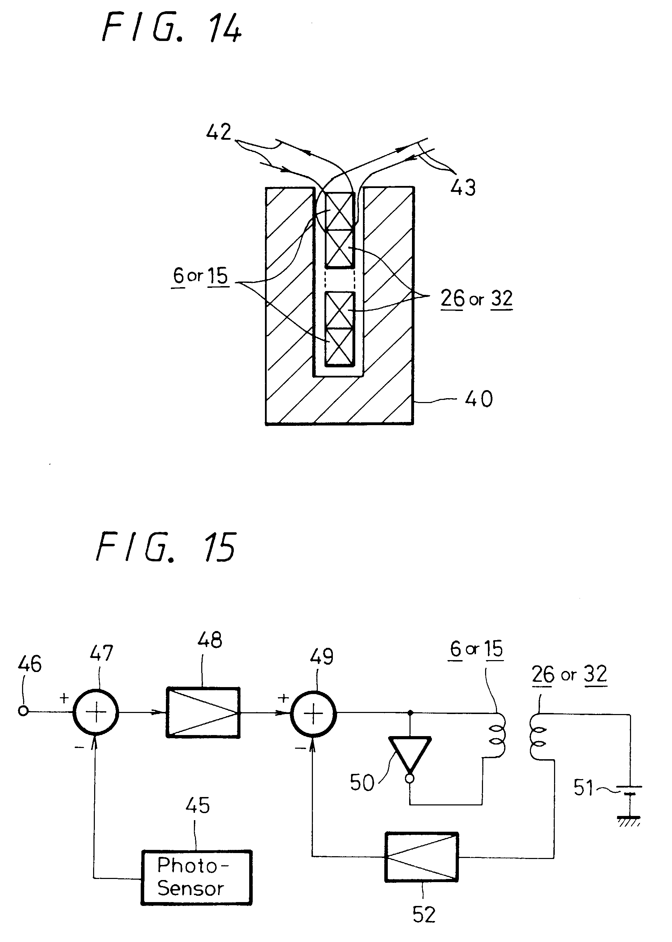

FIG. 14 of the accompanying drawing shows a further example of the structure of the coils shown in FIGS. 12 and 13.

As shown in FIG. 14, damping coil wires 43 are wound around the bobbin 41 (not shown) to construct the damping coil 26 or 32. Further, drive coil (actuator 6 or 15) wires 42 are wound around the damping coil wires 43 to construct the actuator 6 or 15. With this arrangement, the whole thickness of the coil is reduced to increase the torque of the motor because the spacing of the stator is increased with the increase of the thickness (length of the bobbin 41 around which the drive coil wires 42 and the damping coil wires 43 are wound) of the coil, resulting in the torque of the motor being decreased.

The bobbin 41 is rotated in response to a current flowing through the drive coil, i.e., actuator 6 or 15, or the plate glass 7a or 7b is rotated so that the damping coil 26 or 32 generates a voltage proportional to the rotational angular velocity, i.e., E ∞ dθ/dₜ ∞ d/dₜ (magnetic flux).

FIG. 15 of the accompanying drawings shows in block form a main portion of the camera shake correcting apparatus in detail.

As shown in FIG. 15, an instruction signal (detected signal) from the microcomputer 20 is supplied to an input terminal 46 and the instruction signal is supplied to an adding circuit 47.

The adding circuit 47 subtracts the detected signal of the photo-sensor 45 from the instruction signal, and a subtracted result is supplied through an amplifying circuit 48 to an adding circuit 49.

The adding circuit 49 subtracts the signal (i.e., voltage proportional to the rotational angular velocity) supplied thereto from the damping coil 26 or 32 through an amplifying circuit 52 from the signal supplied thereto from the adding circuit 47 through the amplifying circuit 48. A subtracted result is supplied to the actuator 6 or 15 and an inverting circuit 50.

The drive signal from the adding circuit 49 is supplied to one end of the actuator 6 or 15 and the signal from the inverting circuit 50 is supplied to the other end of the actuator 6 or 15, whereby a current is flowed through the actuator 6 or 15 to generate a magnetic flux to rotate the bobbin 41, i.e., the plate glass 7a or 7b.

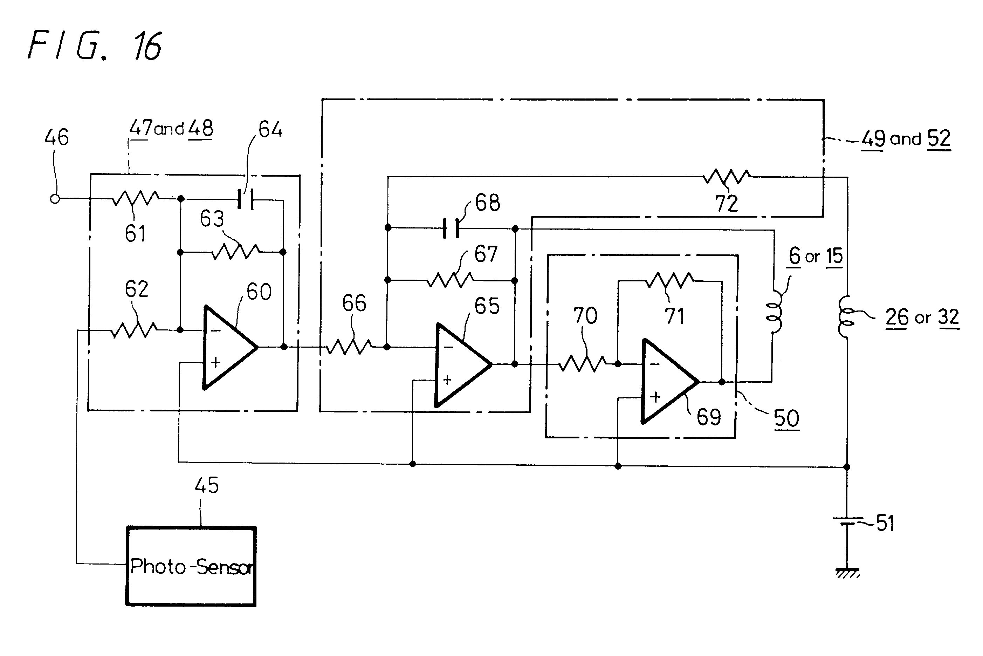

An example of a circuit arrangement of the camera shake correcting apparatus shown in FIG. 14 will be described with reference to FIG. 16 of the accompanying drawings. In FIG. 16, like parts corresponding to those of FIG. 14 are marked with the same references and therefore need not be described in detail.

As shown in FIG. 16, an output terminal of.the photo-sensor 45 is connected through a resistor 62 to an inverting input terminal (-) of an operational amplifier circuit 60. The inverting input terminal (-) of the operational amplifier circuit 60 and the output terminal of the operational amplifier circuit 60 are connected together via a parallel circuit of a resistor 63 and a capacitor 64. The inverting input terminal (-) of the operational amplifier circuit 60 is connected to the input terminal 46 through a resistor 61. A non-inverting input terminal (+) of the operational amplifier circuit 60 is connected to a positive side of the power supply 51. Thus, the adding circuit 47 and the amplifying circuit 48 are formed as shown by a one-dot chain line block in FIG. 16. Then, the output terminal of the operational amplifier circuit 60, i.e., the output terminal of the amplifying circuit 48 is connected through a resistor 65 to an inverting input terminal (-) of an operational amplifier circuit 65. The inverting input terminal (-) of the operational amplifier circuit 65 and the output terminal of the operational amplifier circuit 65 are connected together to a parallel circuit of a resistor 67 and a capacitor 68. The inverting input terminal (-) of the operational amplifier circuit 65 is connected through a resistor 72 and the damping coil 26 or 32 to the positive side of the power supply 51. Thus, the adding circuit 49 and the amplifying circuit 52 are formed as shown by a one-dot chain line block in FIG. 16. Then, the output terminal of the operational amplifier circuit 65, i.e., the output terminal of the amplifying circuit 52 is connected through a resistor 70 to an inverting input terminal (-) of an operational amplifier circuit 69. The output terminal of the operational amplifier circuit 65 is connected through the actuator 6 or 15 to the output terminal of the operational amplifier circuit 69. A non-inverting input terminal (+) of the operational amplifier circuit 69 is connected to the positive side of the power supply 51. Thus, the inverting circuit 50 is formed as shown by a one-dot chain line block in FIG. 16.

The resistors 61, 62 and the resistors 66, 72 are used to determine adding ratios of the adding circuits 47, 49, respectively. The resistors 63, 67 are used to determine the gains of the amplifying circuits 48, 52, respectively. The capacitors 64, 68 construct active low-pass filters, respectively. The resistors 70, 71 are used to determine the gain of the inverting circuit 50.

A servo of the prism 7 in the camera shake correcting apparatus according to this system will be described.

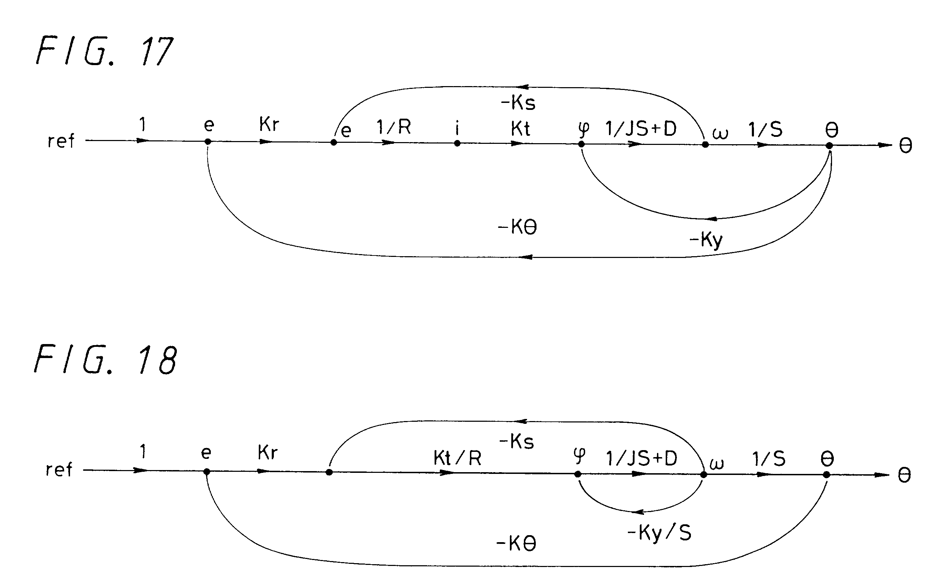

The servo of the prism 7 in the open loop according to this system can be demonstrated in a signal flow diagram forming FIG. 17 of the accompanying drawings.

In FIG. 17, reference symbol R depicts a winding resistance (V/A) of the actuator 6 or 15, Kₜ a torque constant (700g • cm/A), J an inertia (g • cm/sec2), D a viscosity resistance (g • cm/sec) of the liquid in the prism 7, Kθ a detection gain (V/deg) of the vertical angle sensor 8 or 16, K_{y} a spring constant (g • cm/deg) of the spring portion 7c, Kᵣ gains of the adding circuits 24, 25 and the adding circuits 30, 31 (adding circuits 47, 49 in FIG. 15), Kₚ a position, i.e., an amplifying gain of the photo-sensor 45, and Kₛ a velocity feedback, i.e., gain of the damping coil 26 or 32 (amplifying circuit 52 in FIG. 15), respectively.

In the signal flow diagram of FIG. 17, the spring constant K_{y} can be set to - K_{y}/S as shown in FIG. 18.

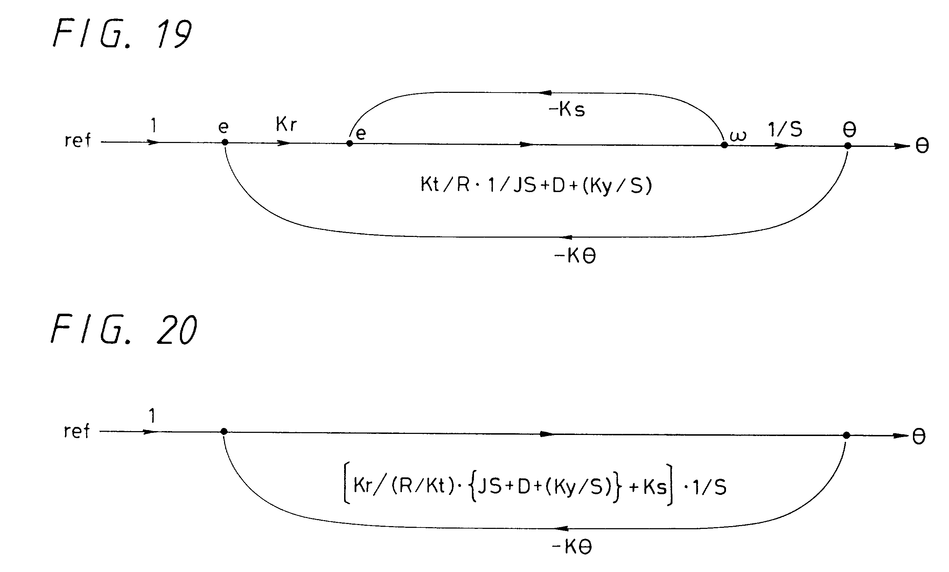

Collecting respective parameters in the velocity feedback gain K_{S}, we have Kₜ/R • {1/JS + D + (K_{y}/S)} as shown in FIG. 19. Collecting respective parameters in the detection gain Kθ of the vertical angle sensors 8, 16, we have Kᵣ/[(R/Kₜ) • {JS + D + (K_{y}/S)} + Kₛ] • 1/S as shown in FIG. 20.

Therefore, gain G_{OPEN(PHASE)} in the open loop can be expressed by the following equation (4):${\text{G}}_{\text{open}} {\text{}}_{\text{(} \text{PHASE} \text{)}} \text{=-} \frac{{\text{K}}_{\text{r}} \text{K} \text{θ}}{\frac{\text{R}}{{\text{K}}_{\text{t}}} \text{(} \text{JS} \text{+} \text{D} \text{+} \frac{{\text{K}}_{\text{y}}}{\text{S}} \text{) +} {\text{K}}_{\text{s}}} \text{·} \frac{\text{1}}{\text{S}} \text{=-} \frac{{\text{K}}_{\text{r}} \text{K} \text{θ}}{\frac{\text{RJ}}{{\text{K}}_{\text{t}}} {\text{S}}^{\text{2}} \text{+(} \frac{\text{RD}}{{\text{K}}_{\text{t}}} \text{+} {\text{K}}_{\text{s}} \text{)} \text{S} \text{+} \frac{{\text{RK}}_{\text{y}}}{{\text{K}}_{\text{t}}}}$

Further, when RD/Dₜ < K_{S} and RK_{y}/Kₜ = 0, gain G_{OPEN(PHASE)} can be expressed by the following equation (5):${\text{G}}_{\text{open(PHASE)}} \text{=-} \frac{{\text{K}}_{\text{r}} \text{K} \text{θ}}{\text{S} \text{(} \frac{\text{RJ}}{{\text{K}}_{\text{t}}} \text{S} \text{+} {\text{K}}_{\text{s}} \text{)}} \text{=-} \frac{\frac{{\text{K}}_{\text{r}} \text{K} \text{θ}}{{\text{K}}_{\text{s}}}}{\text{S} \text{(1+} \frac{\text{RJ}}{{\text{K}}_{\text{t}} {\text{K}}_{\text{s}}} \text{S} \text{)}}$

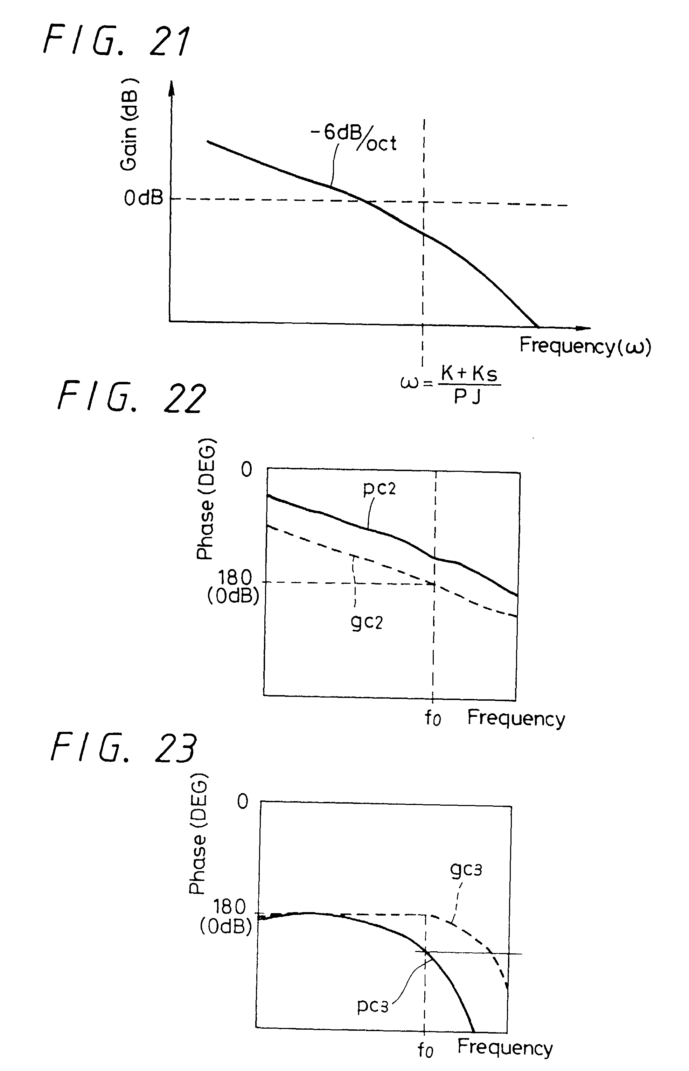

FIG. 21 of the accompanying drawings shows a gain in the open loop where an axis of ordinate represents a gain (dB) and an axis of abscissa represents a frequency (ω). As shown in FIG. 21, when the gain is 0 dB and the frequency ω is KₜKₛ/RJ, the gain in the open loop becomes substantially - 6 dB/oct.

Therefore, a gain in the closed loop can be expressed by the following equation (6):

Comparison of the equation (6) with the equation (3) that expresses the gain in the closed loop of the servo in the${\text{G}}_{\text{close}} \text{(} \text{S} \text{) =} \frac{{\text{G}}_{\text{o}} \text{/} \text{K} \text{θ}}{\text{1+} {\text{G}}_{\text{o}}} \text{=} \frac{\text{1}}{\frac{\text{1}}{{\text{K}}_{\text{r}}} \text{[} \frac{\text{RJ}}{{\text{K}}_{\text{t}}} {\text{S}}^{\text{2}} \text{+(} \frac{\text{RD}}{{\text{K}}_{\text{t}}} \text{+} {\text{K}}_{\text{s}} \text{)} \text{S} \text{+} \frac{{\text{RK}}_{\text{y}}}{{\text{K}}_{\text{t}}} \text{] +} \text{K} \text{θ}} \text{=} \frac{\text{1}}{\frac{\text{RJ}}{{\text{K}}_{\text{r}} {\text{K}}_{\text{t}}} {\text{S}}^{\text{2}} \text{+} \frac{\text{1}}{{\text{K}}_{\text{r}}} \text{(} \frac{\text{RD}}{{\text{K}}_{\text{t}}} \text{+} {\text{K}}_{\text{s}} \text{)} \text{S} \text{+(} \frac{{\text{RK}}_{\text{y}}}{{\text{K}}_{\text{r}} {\text{K}}_{\text{t}}} \text{+} \text{K} \text{θ)}}$ prism 7 of the camera shake correcting apparatus according to the first system reveals the following fact. That is, in the closed loop of the servo of the prism 7 in the camera shake correcting apparatus of this system expressed in the equation (6), because of the addition of the velocity feedback gain Kₛ, a first-order term becomes larger than a zero-order term relatively so that 1/aS₂ + bS + c can be approximated to 1/S(aS + b) more accurately. Also, in the low band, a first-order characteristic of - 6 dB/oct can be presented as shown in FIG. 21.

Further, D (viscosity) and K_{y} (spring constant) that are causes of the nonlinearity and temperature dependency can be improved. That is, if the velocity feedback gain Kₛ is increased, i.e., RD/Kₜ < Kₛ, then the influence of the viscosity D can be reduced. If (RD/Kₜ) S > (RK_{y}/K_{y}Kₜ), then the influence of the spring constant K_{y} can be reduced.

Therefore, in the open loop of the servo of the prism 7 in the camera shake correcting apparatus according to the second system, a phase curve pc2 and a gain curve gc2 are presented as shown in FIG. 22. Hence, the phase margin can be increased.

In the close loop of the servo of the prism 7 in the camera shake correcting apparatus according to the second system, a phase curve pc3 and a gain curve gc3 are presented as shown in FIG. 23. Hence, the phase margin is decreased.

As described above, according to the second system, the damping coils 26 and 32 are disposed in parallel to the prism driving actuators 6 and 15, and the position signals from the vertical angle sensors 8, 15 are subtracted from the detected signals that are obtained by the angular velocity sensors 1 and 10 when the camera is shaken. Further, the rotational angular velocity signals detected by the damping coils 26, 32 are subtracted from these subtracted results and the actuators 6, 15 are respectively driven by these subtracted results serving as the drive signals. Therefore, the nonlinearity of the prism 7 can be alleviated, or the prism 7 can be moved smoothly and the phase margin of the servo characteristic can be increased. Thus, the camera shake correcting apparatus can be prevented from being affected by the fluctuation of elements in the mass-production and also can be prevented from being affected by the temperature characteristic dependency.

The camera shake correcting apparatus according to an embodiment of the present invention will now be described with reference to FIGS. 24 to 26.

Although the control characteristic of the damping coil 26 or 32 in the camera shake correcting apparatus according to the first and second systems is improved,
the actuator 6 or 15 interferes with the damping coil 26 or 32 so that a gain margin cannot be obtained sufficiently in the open loop characteristic of the position (angle) control loop. The gain margin tends to be decreased much more with the fluctuation of temperature. If the gain margin is decreased so much, there is then the risk that an oscillation will occur.

To remove the above-mentioned drawbacks, it has been proposed that the actuator 6 or 15 and the damping coil 26 or 32 are electromagnetically shielded. From a structure standpoint, however, it is impossible to electromagnetically shield the actuator 6 or 15 and the damping coil 26 or 32 from each other.

According to this embodiment of the present invention, a voltage proportional to a current flowing through the actuator 6 or 15 is differentiated and a voltage signal induced by the interference of the damping coil 26 or 32 is generated. A differentiated signal that is obtained by differentiating the voltage proportional to the current flowing through the actuator 6 or 15 is subtracted from the voltage induced when the actuator 6 or 15 interferes with the damping coil 26 or 32, thereby effecting the neutralization processing. Therefore, the characteristics can be prevented from being deteriorated when the actuator 6 or 15 interferes with the damping coil 26 or 32. Thus, the inherent characteristics of the camera shake correcting apparatus can be effectively utilized at maximum. Also, the damping efficiency of the damping coil 26 or 32 can be increased and can be controlled satisfactorily regardless of the fluctuation factors such as the change of temperature or the like.

An embodiment of the present invention will be described below. In FIGS. 24 to 26, like parts corresponding to those of FIGS. 15 and 16 are marked with the same references and therefore need not be described in detail.

As shown in FIG. 24, unlike the example of the circuit arrangement of the main portion of the camera shake correcting apparatus shown in FIG. 15, the output of the actuator 6 or 15 is differentiated by a differentiating circuit 57 and a differentiated signal is supplied through the amplifying circuit 58 to the adding circuit 59. The adding circuit 59 subtracts the differentiated signal from the signal supplied thereto from the damping coil 26 or 32 through the amplifying circuit 52. A resultant subtracted signal is supplied to the adding circuit 49.

The instruction signal (detected signal) from the microcomputer 20 is supplied to the input terminal 46 and this signal is supplied to the adding circuit 47.

The adding circuit 47 subtracts the detected signal of the photo-sensor 45 from the instruction signal and a subtracted result is supplied through the amplifying circuit 48 to the adding circuit 49.

The output of the actuator 6 or 15 is differentiated by the differentiating circuit 57, thereby being produced as a differentiated signal. This differentiated signal is supplied through the amplifying circuit 58 to the adding circuit 59. The adding circuit 59 is supplied with the output (voltage proportional to the rotational angular velocity) from the damping coil 26 or 32 through the amplifying circuit 52. The adding circuit 59 subtracts from the signal supplied thereto from the damping coil 26 or 32 through the amplifying circuit 52 the output, which is output from the actuator 6 or 15 and differentiated by the differentiating circuit 57 through the amplifying circuit 58, i.e., the voltage induced by the damping coil 26 or 32 upon interference. A subtracted signal is supplied to the adding circuit 49. The subtraction in the adding circuit 49 is equal to the so-called neutralization processing where the control efficiency deteriorated when the actuator 6 or 15 interferes with the damping coil 26 or 32 can be alleviated.

The adding circuit 49 subtracts from the signal supplied thereto from the adding circuit 47 through the amplifying circuit 48 the subtracted signal supplied thereto from the actuator 6 or 15 through the differentiating circuit 57 and the amplifying circuit 58. A subtracted signal is supplied to the actuator 6 or 15 and the inverting circuit 50.

Therefore, the drive signal from the adding circuit 49 is supplied to one end of the actuator 6 or 15 and the signal from the inverting circuit 50 is supplied to the other end of the actuator 6 or 15, whereby a current is flowed through the actuator 6 or 15 to generate a magnetic flux, thereby rotating the bobbin 41, i.e., the plate glass 7a or 7b.

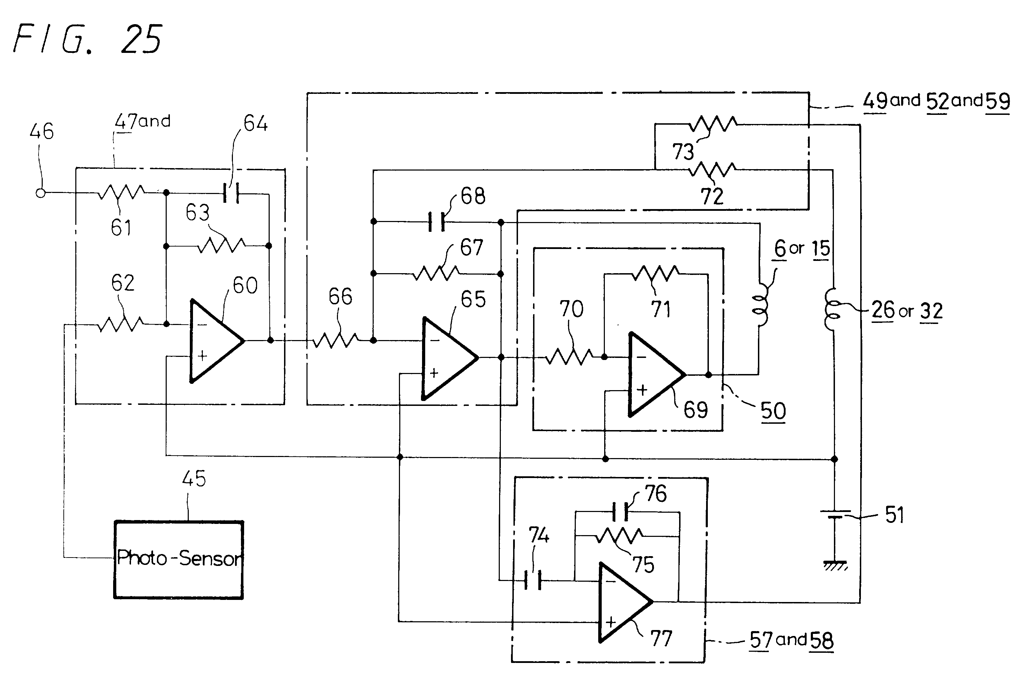

An example of a circuit arrangement of a main portion of the camera shake correcting apparatus shown in FIG. 24 will be described with reference to FIG. 25 of the accompanying drawings. In FIG. 25, parts and elements identical to those of FIG. 16 are marked with the same references and therefore need not be described in detail.

As shown in FIG. 25, the output terminal of the operational amplifier circuit 65 is connected through a capacitor 74 to an inverting input terminal (-) of an operational amplifier circuit 77 constructing the differentiating circuit 57, additionally provided in this embodiment, and the amplifying circuit 58. The inverting input terminal (-) of the operational amplifier circuit 77 and the output terminal of the operational amplifier circuit 77 are connected together via a parallel circuit of a resistor 75 and a capacitor 76. The output terminal of the operational amplifier circuit 77 is connected through a resistor 73 to a junction between the inverting input terminal (-) of the operational amplifier circuit 65 and a resistor 72. The capacitor 74 and the resistor 75 constitute the differentiating circuit 57, and the capacitor 76 constructs the active low-pass filter. The resistor 73 determines an adding ratio and constructs the adding circuit 59.

According to the above-mentioned circuit arrangement, the output of the operational amplifier circuit 65, i.e., the voltage proportional to the current flowing through the actuator 6 or 15 is differentiated by the capacitor 74 and the resistor 75 and then amplified by the operational amplifier circuit 77. Thereafter, the above differentiated signal is subtracted from the signal of the damping coil 26 or 32 by the resistor 73 constructing the adding circuit 59 to thereby prevent the characteristics from being deteriorated when the actuator 6 or 15 interferes with the damping coil 26 or 32.

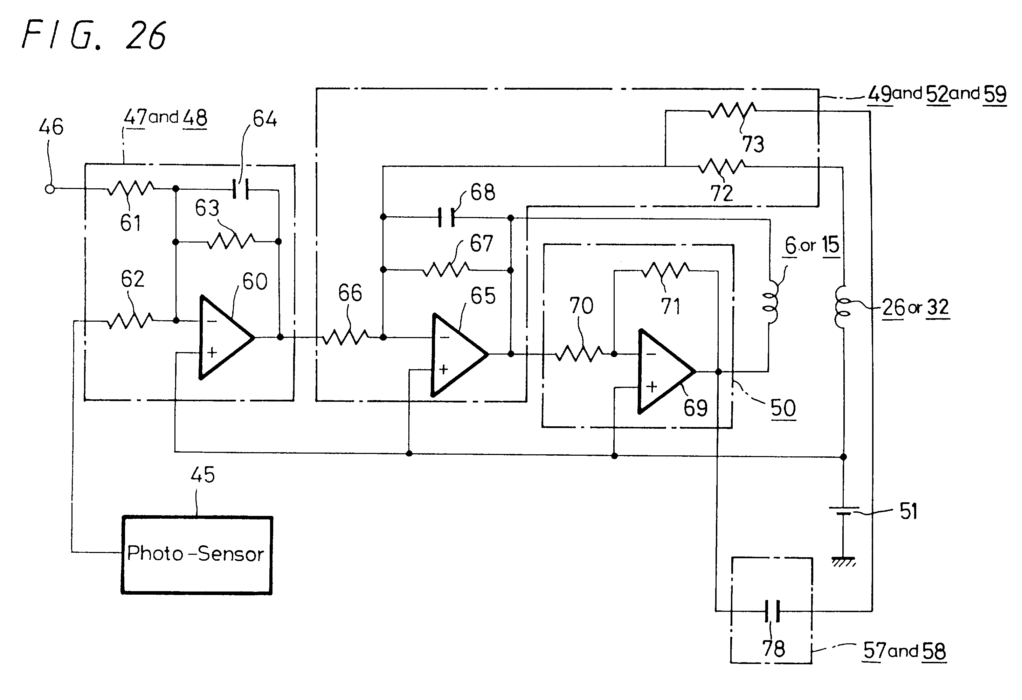

FIG. 26 of the accompanying drawings shows a further example of the circuit arrangement shown in FIG. 25. As shown Figure 26 has a capacitor 78 which constructs the differentiating circuit 57 and the amplifying circuit 58. One other end of the capacitor 78 is connected to a junction between the inverting input terminal (-) of the operational amplifier circuit 65 and the resistor 72 via the resistor 73 which is used to determine the adding ratio and which constructs the adding circuit 59.

Also in the case of the above circuit arrangement, similarly to the circuit shown in FIG. 25, the output of the operational amplifier circuit 65, i.e., the voltage proportional to the current flowing through the actuator 6 or 15 is differentiated by the capacitor 78.
Thereafter, the differentiated signal is subtracted from the signal of the damping coil 26 or 32 by the resistor 73 constructing the adding circuit 59 to thereby prevent the characteristics from being deteriorated when the actuator 6 or 15 interferes with the damping coil 26 or 32.

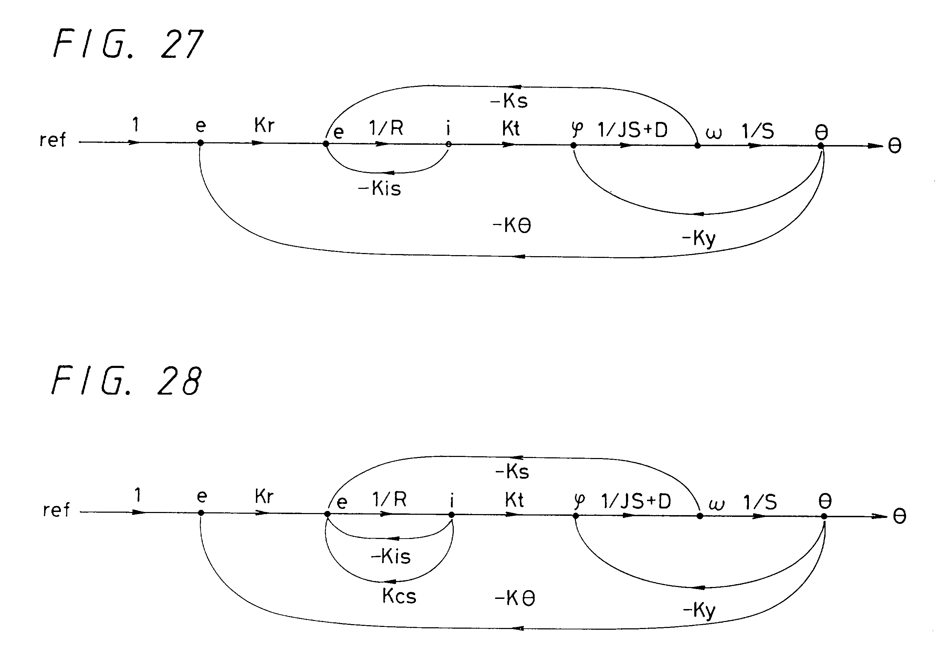

FIG. 27 of the accompanying drawings is a signal flow diagram showing the condition that the so-called neutralization processing described with reference to FIGS. 24 to 26 is not effected. As shown by an interference magnitude coefficient - KiS in FIG. 27, the actuator 6 or 15 interferes with the damping coil 26 or 32, which causes the characteristics to be deteriorated.

FIG. 28 of the accompanying drawings is a signal flow diagram showing the condition that the so-called neutralization processing described with reference to FIGS. 24 to 26 is effected. Although the actuator 6 or 15 interferes with the damping coil 26 or 32 as shown by an interference magnitude coefficient - Kᵢₛ in FIG. 28, the neutralization processing (described in FIGS. 24 to 26) shown by a neutralization magnitude coefficient K_{cs} can prevent the characteristics from being deteriorated when the actuator 6 or 15 interferes with the damping coil 26 or 32.

At that time, a relationship between the interference coefficient Kᵢₛ and the neutralization coefficient K_{cs} must be set as Kᵢₛ ≤ K_{cs}. If the above-mentioned relationship is set as Kᵢₛ > K_{cs}, then the local positive feedback is effected and an oscillation occurs.

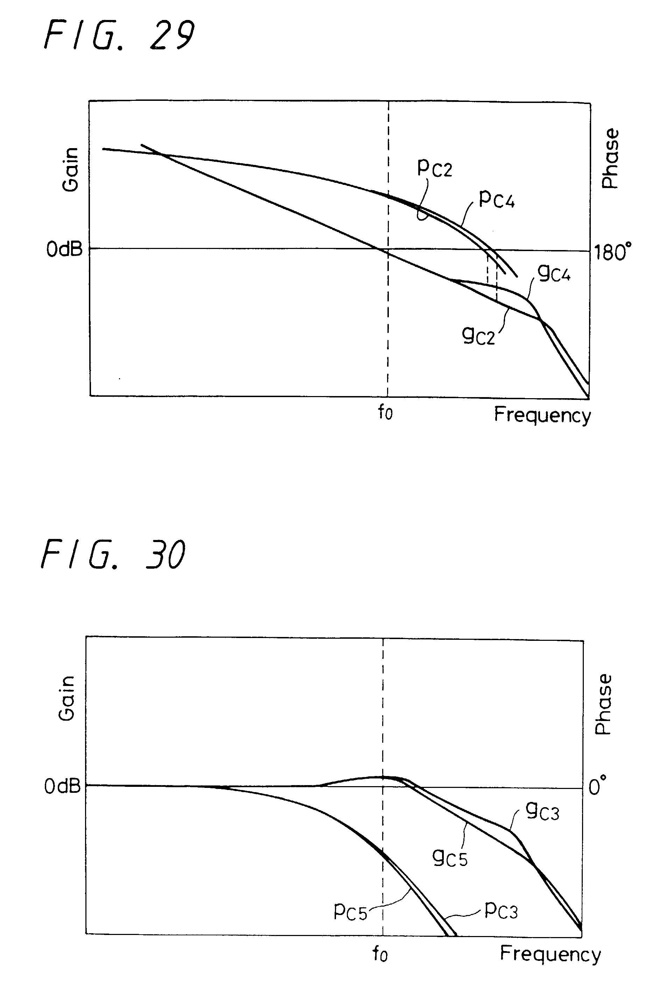

FIG. 29 of the accompanying drawings shows a characteristic of the open loop under the condition that the neutralization processing is effected. When the neutralization processing is effected, as will be clear from a phase curve pc4 and a gain curve gc4, the gain margin can be increased remarkably as compared with the phase curve pc2 and the gain curve gc2 shown in FIG. 22 where the neutralization processing is not effected.

FIG. 30 of the accompanying drawings shows a characteristic of the closed loop under the condition that the neutralization processing is effected. As shown in FIG. 30, as will be clear from a phase curve pc5 and a gain curve gc5, the phase margin is not deteriorated considerably as compared with the phase curve pc3 and the gain curve gc3 shown in FIG. 23 where the neutralization processing is not effected.

Since the differentiated signal, which results from differentiating the voltage proportional to the current flowing through the actuator 6 or 15, is subtracted from the voltage induced when the actuator 6 or 15 interferes with the damping coil 26 or 32 to thereby effect the so-called neutralization processing as described above, the characteristics can be prevented from being deteriorated when the actuator 6 or 15 interferes with the damping coil 26 or 32. The inherent characteristics can be utilized effectively at maximum and the damping efficiency of the damping coil 26 or 32 can be improved. Also, the camera shake correcting apparatus can be controlled satisfactorily regardless of the fluctuation factors such as the change of temperature or the like.

Having described a preferred embodiment of the invention, with reference to the accompanying drawings, it is to be understood that the invention is not limited to this precise embodiment and that various changes and modifications could be effected by one skilled in the art without departing from the scope of the invention as defined in the appended claims.

## Claims

1. Camera apparatus comprising:
a variable angular prism (7), an angle of which is changeable by changing a rotational angle of a plate glass (7a,7b) thereof in response to a drive signal to thereby refract an incident light;
apical angle prism position detecting means (8,16) for detecting a rotational angle position of said plate glass (7a,7b);
camera shake amount detecting means (1,10) for detecting an amount of camera shake;
calculating means (20,47,49,59) for calculating the camera shake amount and the rotational angle position of said plate glass (7a,7b) to generate and output an apical angle prism drive signal; and
variable angular prism drive means including drive coils (6,15) for driving said apical angle prism in response to application of said apical angle prism drive signal to said drive coils (6,15); characterised in that:
the variable angular prism drive means further comprises damping coils (26,32) for providing a damping signal to said calculating means (20,47,49,59);
apical angle prism velocity detecting means (26,32) are provided to detect the rotational angular velocity of said plate glass (7a,7b);
a differentiating circuit (57,58) is connected to receive and differentiate a signal from the drive coils (6,15) and to supply the differentiated signal to said calculating means (20,47,49,59);
said calculating means (20,47,49,59) being arranged to generate said apical angle prism drive signal from the calculated shake amount of said camera, the rotational angle position of said plate glass (7a,7b), the rotational angular velocity of said plate glass (7a,7b) and said differentiated signal.

2. Camera apparatus as claimed in claim 1, wherein said camera shake amount detecting means (1,10) comprises angular velocity detecting means and integrating means (3,12).

3. Camera apparatus as claimed in claim 1 or claim 2, wherein said camera shake amount detecting means (1,10) is arranged to detect horizontal and/or vertical motion amount of a camera.

4. Camera apparatus as claimed in any of the preceding claims, further comprising image-pickup means for focusing a light travelling through said variable angular prism (7) from an object to convert the same into a video signal.

5. Camera apparatus as claimed in any of the preceding claims, further comprising recording means for converting an output video signal from said image-pickup means into a signal format on a recording medium and recording the same.

6. A method of correcting camera shake using a variable angular prism (7), an angle of which is changeable by changing a rotational angle of a plate glass (7a,7b) thereof in response to a drive signal to thereby refract an incident light, the method comprising:
detecting a rotational angle position of the plate glass (7a,7b);
detecting the amount of camera shake;
calculating the camera shake amount and the rotational angle position of the plate glass (7a,7b);
generating and outputting an apical angle prism drive signal based on the camera shake amount and rotational angle position; and
driving said apical angle prism (7) by supplying the apical angle prism drive signal to drive coils (6,15) of said variable angle prism drive means; characterised by:
generating a damping signal by providing damping coils (26,32) in said variable angle prism drive means;
detecting the rotational angular velocity of the plate glass (7a,7b);
differentiating the output from said drive coils (6,15) to generate a differentiated signal; and
generating said apical angle prism drive signal from the camera shake amount, the rotational angle position and rotational angular velocity of said plate glass (7a,7b) and said differentiated signal.

7. A method as claimed in claim 6, further comprising focusing a light travelling through the variable angular prism (7) from an object and converting the same into a video signal.

8. A method as claimed in claim 7, further comprising converting the video signal into a signal format on a recording medium and recording the same.

## Patentansprüche

1. Kameravorrichtung, aufweisend:
ein Variabelwinkelprisma (7), dessen Winkel durch Änderung des Rotationswinkels einer Glasplatte (7a, 7b) davon infolge eines Ansteuersignales änderbar ist, um dadurch einfallendes Licht zu brechen;
eine Spitzenwinkel-Prismenpositions-Erfassungseinrichtung (8, 16) zur Erfassung einer Rotationswinkelposition der Glasplatte (7a, 7b);
eine Kameraschüttelmaß-Erfassungseinrichtung (1, 10) zur Erfassung eines Maßes des Kameraschüttelns;
eine Berechnungseinrichtung (20, 47, 49, 59) zur Berechnung des Kameraschüttelmaßes und der Rotationswinkelposition der Glasplatte (7a, 7b) zur Erzeugung und Ausgabe eines Spitzenwinkelprisma-Ansteuersignals; und
eine Variabelwinkelprisma-Ansteuereinrichtung mit Ansteuerspulen (6, 15) zur Ansteuerung des Spitzenwinkelprismas infolge einer Anwendung des Spitzenwinkelprisma-Ansteuersignals auf die Ansteuerspulen (6, 15); **dadurch gekennzeichnet**, daß
die Variabelwinkelprisma-Ansteuereinrichtung ferner Dämpfspulen (26, 32) zur Lieferung eines Dämpfsignals an die Berechnungseinrichtung (20, 47, 49, 59) aufweist;
eine Spitzenwinkelprisma-Geschwindigkeitserfassungseinrichtung (26, 32) vorgesehen ist, um die Rotationswinkelgeschwindigkeit der Glasplatte (7a, 7b) zu erfassen;
eine Differenzierschaltung (57, 58) angeschlossen ist, ein Signal von den Ansteuerspulen (6, 15) zu empfangen und zu differenzieren und das differenzierte Signal der Berechnungseinrichtung (20, 47, 49, 59) zuzuführen;
wobei die Berechnungseinrichtung (20, 47, 49, 59) ausgebildet ist, das Spitzenwinkelprismen-Ansteuersignal aus dem berechneten Schüttelmaß der Kamera, der Rotationswinkelposition der Glasplatte (7a, 7b), der Rotationswinkelgeschwindigkeit der Glasplatte (7a, 7b) und dem differenzierten Signal zu erzeugen.

2. Kameravorrichtung gemäß Anspruch 1,
wobei die Kameraschüttelmaß-Erfassungseinrichtung (1, 10) eine Winkelgeschwindigkeits-Erfassungseinrichtung und eine Integrationseinrichtung (3, 12) aufweist.

3. Kameravorrichtung gemäß Anspruch 1 oder 2,
wobei die Kameraschüttelmaß-Erfassungseinrichtung (1, 10) ausgebildet ist, eine Horizontal- und/oder Vertikalbewegungsgröße der Kamera zu erfassen.

4. Kameravorrichtung gemäß einem der vorhergehenden Ansprüche,
ferner aufweisend eine Bildaufnahmeeinrichtung zur Fokussierung eines von einem Objekt durch das Variabelwinkelprisma (7) fallenden Lichts, um dasselbe in ein Videosignal umzuwandeln.

5. Kameravorrichtung gemäß einem der vorhergehenden Ansprüche,
ferner aufweisend eine Aufzeichnungseinrichtung zur Umwandlung eines Ausgangsvideosignals von der Bildaufnahmevorrichtung in ein Signalformat auf einem Aufzeichnungsmedium und Aufzeichnung desselben.

6. Verfahren zur Korrektur eines Kameraschüttelns unter Verwendung eines Variabelwinkelprismas (7), dessen Winkel durch Änderung eines Rotationswinkels einer Glasplatte (7a, 7b) von diesem infolge eines Ansteuersignals änderbar ist, um dadurch einfallendes Licht zu brechen, wobei das Verfahren aufweist:
Erfassung einer Rotationswinkelposition der Glasplatte (7a, 7b);
Erfassung eines Maßes des Kameraschüttelns;
Berechnung des Maßes des Kameraschüttelns und der Rotationswinkelposition der Glasplatte (7a, 7b);
Erzeugung und Ausgabe eines Spitzenwinkelprisma-Ansteuersignals basierend auf dem Maß des Kameraschüttelns und der Rotationswinkelposition; und
Ansteuerung des Spitzenwinkelprismas (7) durch Zuführung des Spitzenwinkelprisma-Ansteuersignals, um Spulen (6, 15) der Variabelwinkelprisma-Ansteuereinrichtung anzusteuern; **gekennzeichnet durch**:
Erzeugung eines Dämpfungssignals durch Bereitstellung von Dämpfungsspulen (26, 32) in der Variabelwinkelprisma-Ansteuereinrichtung;
Erfassung der Rotationswinkelgeschwindigkeit der Glasplatte (7a, 7b);
Differenzierung des Ausgangssignals von den Ansteuerspulen (6, 15), um ein differenziertes Signal zu erzeugen;
Erzeugung des Spitzenwinkelprisma-Ansteuersignals aus dem Kameraschüttelmaß, der Rotationswinkelposition und der Rotationswinkelgeschwindigkeit der Glasplatte (7a, 7b) und dem differenzierten Signal.

7. Verfahren gemäß Anspruch 6,
ferner aufweisend die Fokussierung eines von einem Objekt durch das Variabelwinkelprisma (7) fallenden Lichts und Umwandlung desselben in ein Videosignal.

8. Verfahren gemäß Anspruch 7,
ferner aufweisend die Umwandlung des Videosignals in ein Signalformat auf einem Aufzeichnungsmedium und Aufzeichnung desselben.

## Revendications

1. Appareil de caméra comprenant :
un prisme à angle variable (7), dont un angle peut être changé en changeant un angle de rotation d'un verre de plaque (7a, 7b) de celui-ci en réponse à un signal de commande pour réfracter ainsi une lumière incidente ;
un moyen de détection de position de prisme d'angle de sommet (8, 16) pour détecter une position d'angle de rotation dudit verre de plaque (7a, 7b) ;
un moyen de détection de quantité de tremblement de caméra (1, 10) pour détecter une quantité de tremblement de caméra ;
un moyen de calcul (20, 47, 49, 59) pour calculer la quantité de tremblement de caméra et la position d'angle de rotation dudit verre de plaque (7a, 7b) pour générer et fournir un signal de commande de prisme d'angle de sommet ; et
un moyen de commande de prisme d'angle variable comprenant des bobines de commande (6, 15) pour commander ledit prisme d'angle de sommet en réponse à l'application dudit signal de commande de prisme d'angle de sommet auxdites bobines de commande (6, 15) caractérisé en ce que :
le moyen de commande de prisme d'angle variable comprend en outre des bobines d'amortissement (26, 32) pour fournir un signal de commande audit moyen de calcul (20, 47, 49, 59) ;
des moyens de détection de vitesse de prisme d'angle de sommet (26, 32) sont fournis pour détecter la vitesse angulaire de rotation dudit verre de plaque (7a, 7b) ;
un circuit de différenciation (57, 58) est raccordé pour recevoir et différencier un signal des bobines de commande (6, 15) et pour fournir le signal différencié audit moyen de calcul (20, 47, 49, 59) ;
ledit moyen de calcul (20, 47, 49, 59) étant disposé pour générer ledit signal de commande de prisme d'angle de sommet à partir de la quantité de tremblement calculée de ladite caméra, de la position d'angle de rotation dudit verre de plaque (7a, 7b), de la vitesse angulaire de rotation dudit verre de plaque (7a, 7b) et dudit signal différencié.

2. Appareil de caméra selon la revendication 1, dans lequel ledit moyen de détection de quantité de tremblement de caméra (1, 10) comprend un moyen de détection de vitesse et un moyen d'intégration (3, 12).

3. Appareil de caméra selon la revendication 1 ou la revendication 2, dans lequel ledit moyen de détection de quantité de tremblement de caméra (1, 10) est disposé pour détecter une quantité de mouvement horizontal et/ou vertical d'une caméra.

4. Appareil de caméra selon l'une quelconque des revendications précédentes, comprenant en outre un moyen de prise de vue d'image pour focaliser la lumière se déplacant à travers ledit prisme à angle variable (7) à partir d'un objet pour convertir celle-ci en un signal vidéo.

5. Appareil de caméra selon l'une quelconque des revendications précédentes, comprenant en outre un moyen d'enregistrement pour convertir un signal vidéo de sortie dudit moyen de prise de vue d'image en un format de signal sur un support d'enregistrement et pour enregistrer celui-ci.

6. Procédé de correction du tremblement de caméra utilisant un prisme à angle variable (7), dont un angle peut varier en changeant un angle de rotation du verre de plaque (7a, 7b) de celui-ci en réponse à un signal de commande pour ainsi réfracter une lumière incidente, le procédé comprenant :
la détection d'une position d'angle de rotation du verre de plaque (7a, 7b) ;
ia détection de la quantité de tremblement de caméra ;
le calcul de la quantité de tremblement de caméra et la position d'angle de rotation du verre de plaque (7a, 7b) ;
la génération et la fourniture d'un signal de commande de prisme d'angle de sommet sur la base de la quantité de tremblement de caméra et la position d'angle de rotation ; et
la commande dudit prisme d'angle de sommet (7) en fournissant le signal de commande de prisme d'angle de sommet aux bobines de commande (6, 15) dudit moyen de commande de prisme d'angle variable ; caractérisé par :
la génération d'un signal d'amortissement en fournissant des bobines d'amortissement (26, 32) dans ledit moyen de commande de prisme à angle variable ;
la détection de la vitesse angulaire de rotation du verre de plaque (7a, 7b) ;
la différenciation de la sortie desdites bobines de commande (6, 15) pour générer un signal différencié ; et
la génération dudit signal de commande de prisme d'angle de sommet à partir de la quantité de tremblement de caméra, de la position d'angle de rotation et de la vitesse angulaire de rotation dudit verre de plaque (7a, 7b) et dudit signal différencié.

7. Procédé selon la revendication 6, comprenant en outre la focalisation d'une lumière se déplaçant à travers le prisme à angle variable (7) à partir d'un objet et la conversion de celle-ci en un signal vidéo.

8. Procédé selon la revendication 7, comprenant en outre la conversion du signal vidéo en un format de signal sur un support d'enregistrement et l'enregistrement de celui-ci.
